# EUROPEAN PATENT SPECIFICATION

(11) **EP 3 020 635 B1**
(45) Date of publication and mention of the grant of the patent: **11.05.2022**
(21) Application number: 15190674.0
(22) Date of filing: 20.10.2015
(51) Int. Cl.: B64D 11/00, E05B 65/52, H02N 2/18, E05B 47/00

(54) **SELF-CONTAINED ELECTRONIC STOWAGE BIN SYSTEM**
IN SICH GESCHLOSSENES ELEKTRONISCHES VERSTAUUNGSKASTENSYSTEM
SYSTÈME DE RANGEMENT ÉLECTRONIQUE AUTONOME

(30) Priority: 14.11.2014 US 201414542265
(43) Date of publication of application: 18.05.2016
(73) Proprietor: The Boeing Company, Chicago, IL 60606-1596 (US)
(72) Inventor: SCHMITZ, Chad D., Everett WA 98204 (US); PEDERSON, Aaron J., Everett WA 98204 (US); CLOUD, Mark L., Everett WA 98204 (US)
(74) Representative: Plasseraud IP

(56) References cited:
- EP-A1- 2 486 958
- US-A1- 2008 078 871
- US-A1- 2009 243 842
- US-B2- 7 145 436

## Description

### FIELD

This disclosure relates generally to a self-contained electronic stowage bin system for use in an aircraft.

### BACKGROUND

Traditionally, the contents within overhead stowage bins in an aircraft are secured within such bin by a purely mechanical latch system mounted to the door. This mechanical system includes a handle mechanism connected to latching mechanisms by torque tubes. This requires a number of mechanical elements which add weight, require adjustment, and are subject to wear and limited lifetime.

An electronic stowage bin latch system includes a latch handle coupled to a switch which sends an electronic signal to electronically activated end latches to cause the stowage bin door to open. Traditional electronic stowage bin latch systems are connected to an aircraft's internal power system and cabin management system via long cable runs, adding cost and weight to the aircraft.

Accordingly, there is a need for a stowage bin latching system which is not subject to the problems of the conventional mechanical and electronic stowage bin systems.

Additionally, EP2486958, in accordance with its abstract, states that it relates a passenger cabin emergency oxygen device for an aircraft, comprising: at least one electrically driven activation device for activating the emergency oxygen device; at least one energy storage device for storing electrical energy and supplying the electrical energy to the at least one activation device; at least one controller adapted for receiving a signal to activate the emergency oxygen device; and a source of electrical energy. The source of electrical energy and the energy storage device are coupled together for substantially constant energy transmission from the source of electrical energy to the energy storage device at a first energy level. The activation device and the controller are coupled together for signal transmission from the controller to the activation device. The activation device and the energy storage device are coupled together for energy transmission from the energy storage device to the activation device at a second energy level which is higher than the first energy level. The activation device, the energy storage device and the controller build one single unit adapted to be inserted into a roof element of an aircraft cabin interior.

US2008078871, in accordance with its abstract, states that it relates to an interactive switch system for a stowage compartment system for a mobile platform (for example, commercial aircraft). An electronic latching system adapted for use on a moveable compartment that moves relative to a support structure from an opened to a closed position is provided. The electronic latching system includes a switch coupled to the moveable compartment for receiving an input signal indicative of a desired operation of the moveable compartment, and a latch pin coupled to the moveable compartment. The system also includes a latch receiver coupled to the support structure to receive the latch pin to secure the moveable compartment in the closed position, and for releasing the latch pin to enable the moveable compartment to enter the opened position. The system further includes a control system in communication with the switch and the latch receiver to receive the input signal. The control system signals the latch receiver to secure or release the latch pin based on the input signal.

US 7 145 436, in accordance with its abstract, states that it relates to a door opening and closing apparatus which has a motor, a door latch and a power generation mechanism. When the voltage of the battery is below a level needed to drive the electric actuator, a predetermined manipulation of the power generation mechanism generates the power needed to drive the motor. Therefore, when the voltage of a battery that supplies electric power to the electric actuator is below a level needed to drive the electric actuator, the door opens.

### SUMMARY

The claimed subject matter is claimed in independent claims. Further embodiments are claimed in dependent claims.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

The following detailed description, given by way of example and not intended to limit the present disclosure solely thereto, will best be understood in conjunction with the accompanying drawings in which:
FIG. 1 is a block diagram of a self-contained electronic stowage bin system according to an aspect of the present disclosure;
FIG. 2 is a block diagram of an alternative embodiment of the self-contained electronic stowage bin system according to the present disclosure;
FIG. 3 is a diagram of a latch button according to an aspect of the present disclosure;
FIG. 4 is a diagram of a latching mechanism according to an aspect of the present disclosure; and
FIG. 5 is a diagram of an alternative embodiment of a latch button incorporating a bi-stable display for indicating latch status according to a further aspect of the present disclosure.

### DETAILED DESCRIPTION

In the present disclosure, like reference numbers refer to like elements throughout the drawings, which illustrate various exemplary embodiments of the present disclosure.

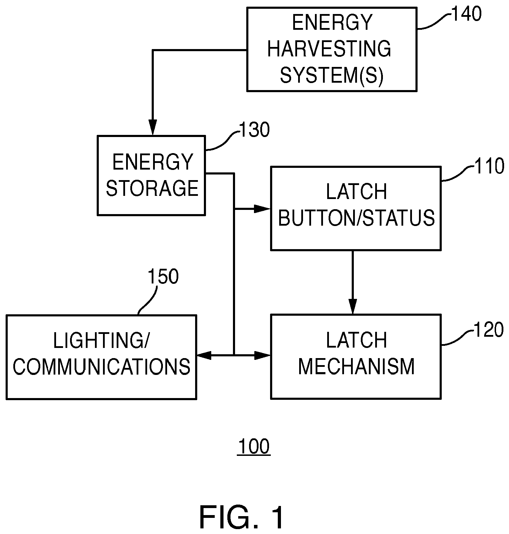

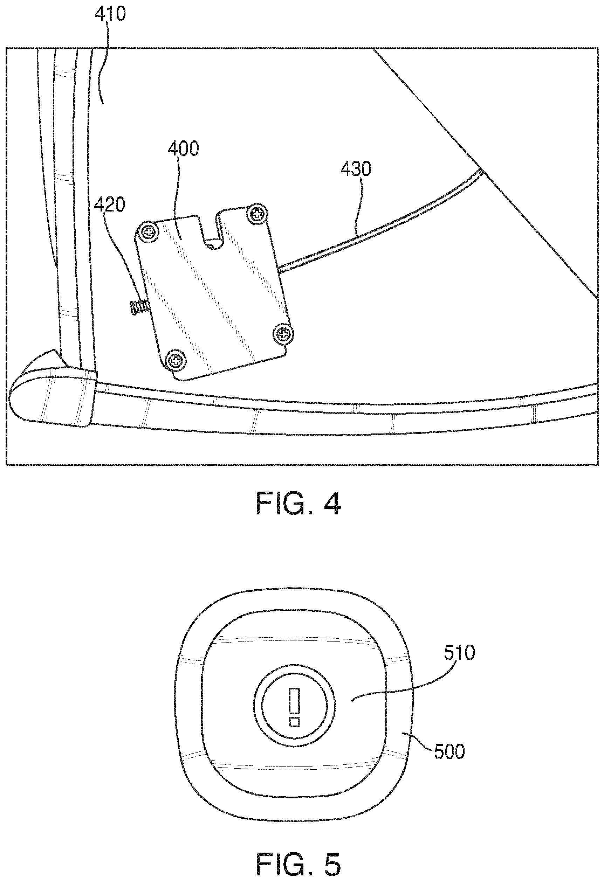

Referring now to FIG. 1, the latching system 100 (also referred to as a "self-contained electronic latching system" or an "electronic latching system") of the present disclosure includes a latch button 110 (which may also incorporate a status indicator as discussed with respect to FIG. 5 below), an electronic latching mechanism 120, an energy storage device 130, one or more energy harvesting systems 140 and, optionally, lighting and/or communications devices 150. The latch button 110 is an electronic switch mounted, for example, on a door of an aircraft stowage bin that is used to activate the latch mechanism 120. The latch mechanism 120 is shown in detail in FIG. 4 below and consists of, for example, one or more solenoid-driven devices which are used to push open the door of the aircraft stowage bin when activated and which also may incorporate elements used to secure or latch the door when a passenger or airline attendant pushes the door closed. Energy storage device 130 is any conventional device used for the storage of energy, including but not limited to a battery or capacitor and appropriate related electronic circuits. The energy harvesting system (or systems) 140 generate electricity by various methods as discussed below. Finally, lighting and/or communications devices 150 may also be locally powered via energy storage device 130 and may constitute architectural lighting for the local area, indicator lighting as discussed with respect to FIG. 5, and system communications devices (e.g., powered speakers).

Devices used to capture energy may be vibration, piezoelectric, electromechanical (microgenerator), photovoltaic, thermoelectric, or some combination thereof, depending on the type of energy source identified for use. Examples of energy sources include, but are not limited to one or more of the following: (1) rotation of internal latch components; (2) additional linear motion capture of the latch strike interface; (3) rotation at pivot points (e.g., door hinges); (4) linear dampers; (5) motion capture; (6) cabin or external light; (7) thermal gradients; and (8) cabin vibration. In a further embodiment, particularly for new installations, the energy harvesting system 140 may also include a direct connection to the aircraft power system that can provide power to supplement the power generated by the energy capture devices.

In one embodiment, energy storage device 130 may be a rechargeable battery, so that the energy locally generated by energy harvesting systems 140 may be used to continually maintain the energy storage level within such battery. In a further embodiment, the rechargeable battery is replaceable. In another embodiment, energy storage device 130 may be a capacitor (and associated electronic circuitry) that is charged by the energy locally generated by energy harvesting systems 140. In some embodiments, a number of different energy sources are combined to comprise energy harvesting systems 140, as necessary to maintain the required energy level in energy storage device 130 that is necessary to operate latch mechanism 120 and any optionally added ancillary equipment such as lighting/communications devices 150.

In the embodiment shown in FIG. 1, all of the component elements are self-contained and do not require direct connection to the aircraft power. This allows for easy retrofit of existing mechanically latched stowage bins in aircrafts. However, in other embodiments, it may be desirable to add energy harvesting systems which are not proximate to the particular aircraft stowage bin.

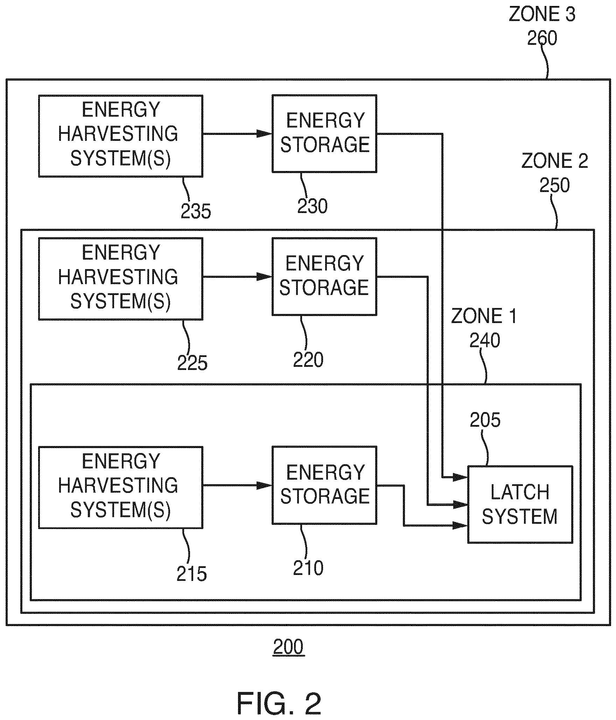

Referring now to FIG. 2, a latching system 200 (also referred to as an "electronic latching system") is shown which combines both local and remote energy harvesting systems 215, 225, 235. In particular, system 200 includes a latch system 205 (consisting of, for example, latch button 110 and latch mechanism 120 of FIG. 1) coupled to a first energy storage device 210 and a first energy harvesting system (or systems) 215. Latch system 205, first energy storage device 210 and first energy harvesting system (or systems) 215 are located within a first zone 240 (Zone 1) that may be within the confines of the latching system of the aircraft stowage bin. System 200 also include a second energy storage device 220 and an associated second energy harvesting system 225 that is located within a second zone 250 (Zone 2), with second energy storage device 220 also coupled to supply power to latch system 205. Zone 2 250 may consist of the area within the confines of the aircraft stowage bin but separate from the latch system 205. Finally, system 200 may also include a third energy storage device 230 and an associated third energy harvesting system 235 that is located within a third zone 260 (Zone 3), with third energy storage device 230 also coupled to supply power to latch system 205. Zone 3 260 may consist of the area external to the aircraft stowage bin within the aircraft.

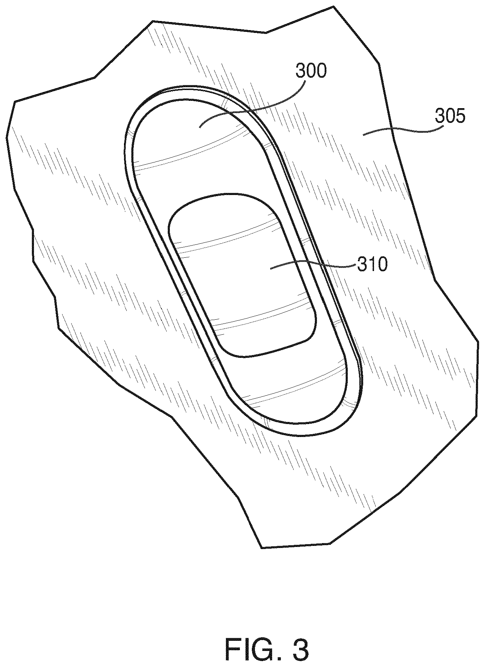

FIG. 3 shows a latch button system 300 mounted in a door 305 of an aircraft stowage bin, including the activation or latch button 310 within the latch button system 300 that includes an electrical switch coupled to the latching mechanism (not shown in FIG. 3). FIG. 4 shows latching mechanism 400 mounted on a sidewall 410 of an open aircraft stowage bin. As discussed above, latching mechanism 400 includes a solenoid-driven member 420 that pushes the door of the aircraft stowage bin open upon activation and may also include latching elements used to keep the door closed when a passenger or airline attendant pushes the door closed. A cable 430 is coupled between the electronic switch in latch button system 300 and latching mechanism 400. When the latch button is activated by a passenger or airline attendant, an electrical signal is passed via electrical conductors in cable 430 from the latch button to latching mechanism 400 to cause latching mechanism 400 to push the door of the aircraft stowage bin open.

Referring now to FIG. 5, an alternative version of the latch button system is shown which incorporates, for example, a conventional low-energy bi-stable display on the surface 510 of latch button 500. This display may be used to indicate when the door of the aircraft stowage bin is not properly secured. The use of a bi-stable display minimizes energy drain, since such a display only requires energy to change states and does not continually consume energy. In FIG. 5, the bi-stable display covers the complete surface 510 of latch button 500, but in other embodiments, such display may cover only a portion thereof. In addition, the use of the character "!" is merely exemplary and, as one of ordinary skill in the art will readily recognize, any desired character or symbol may be used, and, in some cases, the symbol or character may be omitted and the color only may be relied upon to provide an indication that the door of the aircraft stowage bin is not properly secured (i.e., when the color is activated, the door is not closed).

By using a self-contained power generating source, the system disclosed herein combines the best features of mechanical latches (i.e., an independent design) and of electronic latches (i.e., lighter weight and feedback displays). The independent nature of this system allows use in both new aircraft (during construction) and existing aircraft (via retrofit of existing mechanical latch systems).

Although the present disclosure has been particularly shown and described with reference to the preferred embodiments and various aspects thereof, it will be appreciated by those of ordinary skill in the art that various changes and modifications may be made without departing from scope of the disclosure, as long as they fall within the scope of the claims.

## Claims

1. An aircraft stowage bin, comprising a door (305) and an electronic latching system (100, 200) for the aircraft stowage bin, the electronic latching system (100, 200) comprising:
an energy storage device (130, 210, 220);
an electronic latching mechanism (120, 400) for opening the door (305) of the aircraft stowage bin, the electronic latching mechanism being configured to open the door upon receipt of a signal on an input, the electronic latching mechanism (120, 400) being coupled to the energy storage device (130, 210, 220) and configured to receive electrical power only from the energy storage device (130, 210, 220);
a latch button (110, 310, 500) configured to generate the signal in an electronic switch coupled to the input of the electronic latching mechanism (120, 400) upon activation of the latch button (110, 310, 500); and
one or more energy harvesting systems (140, 215, 225) coupled to the energy storage device (130, 210, 220), each of the one or more energy harvesting systems (140, 215, 225) configured to generate electricity and to provide the generated electricity to the energy storage device (130, 210, 220),
wherein one of the one or more energy harvesting systems (140, 215, 225) is configured to generate electricity by harvesting aircraft cabin vibrations.

2. The aircraft stowage bin of claim 1, wherein the latch button (110, 310, 500) is mounted on the door (305) of the aircraft stowage bin.

3. The aircraft stowage bin of claim 1 or 2, wherein the electronic latching mechanism (120, 400) further comprises an element for securing the door (305) in a closed position.

4. The aircraft stowage bin of any one of claims 1 to 3, wherein one of the one or more energy harvesting systems (140, 215, 225) is configured to generate electricity based upon one of: motion supplied to a piezoelectric device and motion supplied to an electromechanical device.

5. The aircraft stowage bin of any one of claim 1 to 3, wherein one of the one or more energy harvesting systems (140, 215, 225) is incorporated into the latch button (110, 310, 500) and is configured to generate electricity using a piezoelectric device and/or an electromechanical device.

6. The aircraft stowage bin of any one of claims 1 to 5, wherein the energy storage device (130, 210, 220) is either a capacitor or a battery.

7. The aircraft stowage bin of any one of claims 1 to 6, further comprising a low-energy bi-stable display mounted on a surface (510) of the latch button (500), the low-energy bi-stable display providing an indication of a latching status of the door (305).

8. The aircraft stowage bin of claim 1 or 2, wherein:
the energy storage device (130) is a first energy storage device (210), wherein the electronic latching mechanism (120, 400) is coupled to the first energy storage device (210) and configured to receive electrical power from the first energy storage device (210);
a latch system (205) comprises the latch button (110, 310, 500);
the one or more energy harvesting systems (140) is one or more first energy harvesting systems (215) coupled to the first energy storage device (210), each of the one or more first energy harvesting systems (215) incorporated into the latch button (110, 310, 500) and configured to generate electricity based upon piezoelectric and/or electromechanical action, and
the electronic latching system (200) further comprises:
a second energy storage device (220); and
one or more second energy harvesting systems (225) coupled to the second energy storage device (220), each of the one or more second energy harvesting systems (225) configured to generate electricity and to provide the generated electricity to the second energy storage device (220), each of the one or more second energy harvesting systems (225) incorporated into the aircraft stowage bin;
wherein the latch system (205) is also coupled to the second energy storage device (220) and is also configured to receive electrical power from the second energy storage device (220).

9. The aircraft stowage bin of claim 8, wherein one of the one or more second energy harvesting systems (225) is configured to generate electricity using a piezoelectric device and/or an electromechanical device.

10. A self-contained electronic stowage bin system for use in an aircraft, the stowage bin system comprising the aircraft stowage bin of claim 8 or 9 and wherein the electronic latching system (200) further comprises:
a third energy storage device (230); and
one or more third energy harvesting systems (235) coupled to the third energy storage device (230), each of the one or more third energy harvesting systems (235) configured to generate electricity and to provide the generated electricity to the third energy storage device (230), each of the one or more third energy harvesting systems (235) mounted outside of the aircraft stowage bin;
wherein the latch system (205) is also coupled to the third energy storage device (230) and is also configured to receive electrical power from the third energy storage device (230).

11. The system of claim 10, wherein one of the one or more third energy harvesting systems (235) is configured to generate electricity using a photovoltaic device.

12. The system of claim 10, wherein one of the one or more third energy harvesting systems (235) is configured to generate electricity using a thermoelectric device.

13. The system of claim 11 wherein the electronic latching system (200) further comprises a low-energy bi-stable display mounted on a surface (510) of the latch button (110, 500), the low-energy bi-stable display providing an indication of a latching status of the door (305).

14. An aircraft comprising the system of claim 10, wherein the aircraft stowage bin is mounted within the aircraft and wherein one of the one or more third energy harvesting systems (235) is configured to generate electricity by harvesting aircraft cabin vibrations.

15. A method of operating a latching system (100) of an aircraft stowage bin, comprising the steps of:
generating electricity in one or more energy harvesting systems (140, 215, 225, 235) by harvesting aircraft cabin vibrations;
providing the generated electricity to an energy storage device (130, 210, 220, 230);
upon activation of a latch button (110, 310, 500), generating a signal in an electronic switch that is coupled to an input of an electronic latching mechanism (120, 400); and
upon receipt of the signal at the input of the electronic latching mechanism (120, 400), causing the door (305) of the aircraft stowage bin to open by activating the electronic latching mechanism (120, 400), wherein the electronic latching mechanism (120, 400) is configured to receive electrical power only from the energy storage device (130, 210, 220, 230).

## Patentansprüche

1. Flugzeug-Verstauungskasten, aufweisend eine Tür (305) und ein elektronisches Verriegelungssystem (100, 200) für den Flugzeug-Verstauungskasten, wobei das elektronisches Verriegelungssystem (100, 200) aufweist:
eine Energiespeicherungsvorrichtung (130, 210, 220);
einen elektronischen Verriegelungsmechanismus (120, 400) zum Öffnen der Tür (305) des Flugzeug-Verstauungskastens, wobei der elektronische Verriegelungsmechanismus konfiguriert ist, um bei Empfang eines Signals an einem Eingang die Tür zu öffnen, wobei der elektronische Verriegelungsmechanismus (120, 400) mit der Energiespeicherungsvorrichtung (130, 210, 220) gekoppelt ist und konfiguriert ist, um elektrischen Strom nur aus der Energiespeicherungsvorrichtung (130, 210, 220) zu empfangen;
eine Verriegelungstaste (110, 310, 500), die konfiguriert ist, um bei Aktivierung der Verriegelungstaste (110, 310, 500) das Signal in einem mit dem Eingang des elektronischen Verriegelungsmechanismus (120, 400) gekoppelten elektronischen Schalter zu erzeugen; und
ein oder mehrere mit der Energiespeicherungsvorrichtung (130, 210, 220) gekoppelte Energie erntende Systeme (140, 215, 225), wobei jedes des einen oder der mehreren Energie erntenden Systeme (140, 215, 225) konfiguriert ist, um Elektrizität zu erzeugen und die erzeugte Elektrizität an der Energiespeicherungsvorrichtung (130, 210, 220) bereitzustellen,
wobei eines des einen oder der mehreren Energie erntenden Systeme (140, 215, 225) konfiguriert ist, um Elektrizität durch Ernten von Flugzeugkabinenschwingungen zu erzeugen.

2. Flugzeug-Verstauungskasten nach Anspruch 1, wobei die Verriegelungstaste (110, 310, 500) an der Tür (305) des Flugzeug-Verstauungskastens angebracht ist.

3. Flugzeug-Verstauungskasten nach Anspruch 1 oder 2, wobei der elektronische Verriegelungsmechanismus (120, 400) desweiteren ein Element zum Sichern der Tür (305) in einer geschlossenen Position aufweist.

4. Flugzeug-Verstauungskasten nach einem der Ansprüche 1 bis 3, wobei eines des einen oder der mehreren Energie erntenden Systeme (140, 215, 225) konfiguriert ist, um Elektrizität auf Basis von Bewegung, die einer piezoelektrischen Vorrichtung zugeführt wird, und/oder Bewegung, die einer elektromechanischen Vorrichtung zugeführt wird, zu erzeugen.

5. Flugzeug-Verstauungskasten nach einem der Ansprüche 1 bis 3, wobei eines des einen oder der mehreren Energie erntenden Systeme (140, 215, 225) in die Verriegelungstaste (110, 310, 500) eingebaut ist und konfiguriert ist, um Elektrizität unter Verwendung einer piezoelektrischen Vorrichtung und/oder einer elektromechanischen Vorrichtung zu erzeugen.

6. Flugzeug-Verstauungskasten nach einem der Ansprüche 1 bis 5, wobei die Energiespeicherungsvorrichtung (130, 210 220) entweder ein Kondensator oder eine Batterie ist.

7. Flugzeug-Verstauungskasten nach einem der Ansprüche 1 bis 6, desweiteren aufweisend eine niederenergetische bistabile Anzeige, die an einer Oberfläche (510) der Verriegelungstaste (500) angebracht ist, wobei die niederenergetische bistabile Anzeige eine Angabe eines Verriegelungsstatus der Tür (305) bereitstellt.

8. Flugzeug-Verstauungskasten nach Anspruch 1 oder 2, wobei:
die Energiespeicherungsvorrichtung (130) eine erste Energiespeicherungsvorrichtung (210) ist, wobei der elektronische Verriegelungsmechanismus (120, 400) mit der ersten Energiespeicherungsvorrichtung (210) gekoppelt ist und konfiguriert ist, um elektrischen Strom aus der ersten Energiespeicherungsvorrichtung (210) zu empfangen;
ein Riegelsystem (205) die Verriegelungstaste (110, 310, 500) aufweist;
das eine oder die mehreren Energie erntenden Systeme (140) ein oder mehrere mit der ersten Energiespeicherungsvorrichtung (210) gekoppelte erste Energie erntende Systeme (215) ist/sind, wobei jedes des einen oder der mehreren ersten Energie erntenden Systeme (215) in die Verriegelungstaste (110, 310, 500) eingebaut ist und konfiguriert ist, um Elektrizität auf Basis eines piezoelektrischen und/oder elektromechanischen Vorgangs zu erzeugen, und
das elektronische Verriegelungssystem (200) desweiteren aufweist:
eine zweite Energiespeicherungsvorrichtung (220); und
ein oder mehrere mit der zweiten Energiespeicherungsvorrichtung (220) gekoppelte zweite Energie erntende Systeme (225), wobei jedes des einen oder der mehreren zweiten Energie erntenden Systeme (225) konfiguriert ist, um Elektrizität zu erzeugen und die erzeugte Elektrizität an der zweiten Energiespeicherungsvorrichtung (220) bereitzustellen, wobei jedes des einen oder der mehreren zweiten Energie erntenden Systeme (225) in den Flugzeug-Verstauungskasten eingebaut ist;
wobei das Riegelsystem (205) auch mit der zweiten Energiespeicherungsvorrichtung (220) gekoppelt ist und auch konfiguriert ist, um elektrischen Strom aus der zweiten Energiespeicherungsvorrichtung (220) zu empfangen.

9. Flugzeug-Verstauungskasten nach Anspruch 8, wobei eines des einen oder der mehreren zweiten Energie erntenden Systeme (225) konfiguriert ist, um Elektrizität unter Verwendung einer piezoelektrischen Vorrichtung und/oder einer elektromechanischen Vorrichtung zu erzeugen.

10. In sich geschlossenes elektronisches Verstauungskastensystem zur Verwendung in einem Flugzeug, wobei das Verstauungskastensystem den Flugzeug-Verstauungskasten nach Anspruch 8 oder 9 aufweist, und wobei das elektronische Verriegelungssystem (200) desweiteren aufweist:
eine dritte Energiespeicherungsvorrichtung (230); und
ein oder mehrere mit der dritten Energiespeicherungsvorrichtung (230) gekoppelte dritte Energie erntende Systeme (235), wobei jedes des einen oder der mehreren dritten Energie erntenden Systeme (235) konfiguriert ist, um Elektrizität zu erzeugen und die erzeugte Elektrizität an der dritten Energiespeicherungsvorrichtung (230) bereitzustellen, wobei jedes des einen oder der mehreren dritten Energie erntenden Systeme (235) außerhalb des Flugzeug-Verstauungskasten angebracht ist;
wobei das Riegelsystem (205) auch mit der dritten Energiespeicherungsvorrichtung (230) gekoppelt ist und auch konfiguriert ist, um elektrischen Strom aus der dritten Energiespeicherungsvorrichtung (230) zu empfangen.

11. System nach Anspruch 10, wobei eines des einen oder der mehreren dritten Energie erntenden Systeme (235) konfiguriert ist, um Elektrizität unter Verwendung einer photovoltaischen Vorrichtung zu erzeugen.

12. System nach Anspruch 10, wobei eines des einen oder der mehreren dritten Energie erntenden Systeme (235) konfiguriert ist, um Elektrizität unter Verwendung einer thermoelektrischen Vorrichtung zu erzeugen.

13. System nach Anspruch 11, wobei das elektronische Verriegelungssystem (200) außerdem eine niederenergetische bistabile Anzeige aufweist, die an einer Oberfläche (510) der Verriegelungstaste (110, 500) angebracht ist, wobei die niederenergetische bistabile Anzeige eine Angabe eines Verriegelungsstatus der Tür (305) bereitstellt.

14. Flugzeug aufweisend das System nach Anspruch 10, wobei der Flugzeug-Verstauungskasten in dem Flugzeug angebracht ist und wobei eines des einen oder der mehreren dritten Energie erntenden Systeme (235) konfiguriert ist, um Elektrizität durch Ernten von Flugzeugkabinenschwingungen zu erzeugen.

15. Verfahren zum Betreiben eines Verriegelungssystems (100) eines Flugzeug-Verstauungskastens, aufweisend die Schritte:
Erzeugen von Elektrizität in einem oder mehreren Energie erntenden Systemen (140, 215, 225, 235) durch Ernten von Flugzeugkabinenschwingungen;
Bereitstellen der erzeugten Elektrizität an einer Energiespeicherungsvorrichtung (130, 210, 220, 230);
bei Aktivierung einer Verriegelungstaste (110, 310, 500), Erzeugen eines Signals in einem elektronischen Schalter, der mit einem Eingang eines elektronischen Verriegelungsmechanismus (120, 400) gekoppelt ist; und
bei Empfang des Signals am Eingang des elektronischen Verriegelungsmechanismus (120, 400); Bewirken eines Öffnens der Tür (305) des Flugzeug-Verstauungskastens durch Aktivieren des elektronischen Verriegelungsmechanismus (120, 400), wobei der elektronischen Verriegelungsmechanismus (120, 400) konfiguriert ist, um elektrischen Strom nur aus der Energiespeicherungsvorrichtung (130, 210, 220, 230) zu empfangen.

## Revendications

1. Compartiment de rangement d'aéronef, comprenant une porte (305) et un système de verrouillage électronique (100, 200) pour le compartiment de rangement d'aéronef, le système de verrouillage électronique (100, 200) comprenant :
un dispositif de stockage d'énergie (130, 210, 220) ;
un mécanisme de verrouillage électronique (120, 400) pour l'ouverture de la porte (305) du compartiment de rangement d'aéronef, le mécanisme de verrouillage électronique étant configuré pour ouvrir la porte lors de la réception d'un signal sur une entrée, le mécanisme de verrouillage électronique (120, 400) étant couplé au dispositif de stockage d'énergie (130, 210, 220) et configuré pour recevoir une puissance électrique provenant uniquement du dispositif de stockage d'énergie (130, 210, 220) ;
un bouton de verrou (110, 310, 500) configuré pour générer le signal dans un commutateur électronique couplé à l'entrée du mécanisme de verrouillage électronique (120, 400) lors de l'activation du bouton de verrou (110, 310, 500) ; et
un ou plusieurs systèmes de collecte d'énergie (140, 215, 225) couplés au dispositif de stockage d'énergie (130, 210, 220), chacun des un ou plusieurs systèmes de collecte d'énergie (140, 215, 225) étant configuré pour générer de l'électricité et pour fournir l'électricité générée au dispositif de stockage d'énergie (130, 210, 220),
dans lequel l'un des un ou plusieurs systèmes de collecte d'énergie (140, 215, 225) est configuré pour générer de l'électricité par la collecte de vibrations de cabine d'aéronef.

2. Compartiment de rangement d'aéronef selon la revendication 1, dans lequel le bouton de verrou (110, 310, 500) est monté sur la porte (305) du compartiment de rangement d'aéronef.

3. Compartiment de rangement d'aéronef selon la revendication 1 ou 2, dans lequel le mécanisme de verrouillage électronique (120, 400) comprend en outre un élément pour la fixation de la porte (305) dans une position fermée.

4. Compartiment de rangement d'aéronef selon l'une quelconque des revendications 1 à 3, dans lequel l'un des un ou plusieurs systèmes de collecte d'énergie (140, 215, 225) est configuré pour générer de l'électricité sur la base de l'un parmi : un mouvement conféré à un dispositif piézoélectrique et un mouvement conféré à un dispositif électromécanique.

5. Compartiment de rangement d'aéronef selon l'une quelconque des revendications 1 à 3, dans lequel l'un des un ou plusieurs systèmes de collecte d'énergie (140, 215, 225) est incorporé dans le bouton de verrou (110, 310, 500) et est configuré pour générer de l'électricité à l'aide d'un dispositif piézoélectrique et/ou d'un dispositif électromécanique.

6. Compartiment de rangement d'aéronef selon l'une quelconque des revendications 1 à 5, dans lequel le dispositif de stockage d'énergie (130, 210, 220) est soit un condensateur soit une batterie.

7. Compartiment de rangement d'aéronef selon l'une quelconque des revendications 1 à 6, comprenant en outre un afficheur bistable à basse consommation d'énergie monté sur une surface (510) du bouton de verrou (500), l'afficheur bistable à basse consommation d'énergie fournissant une indication d'un état de verrouillage de la porte (305).

8. Compartiment de rangement d'aéronef selon la revendication 1 ou 2, dans lequel :
le dispositif de stockage d'énergie (130) est un premier dispositif de stockage d'énergie (210), dans lequel le mécanisme de verrouillage électronique (120, 400) est couplé au premier dispositif de stockage d'énergie (210) et configuré pour recevoir une puissance électrique provenant du premier dispositif de stockage d'énergie (210) ; un système de verrou (205) comprend le bouton de verrou (110, 310, 500) ;
les un ou plusieurs systèmes de collecte d'énergie (140) sont un ou plusieurs premiers systèmes de collecte d'énergie (215) couplés au premier dispositif de stockage d'énergie (210), chacun des un ou plusieurs premiers systèmes de collecte d'énergie (215) étant incorporés dans le bouton de verrou (110, 310, 500) et configurés pour générer de l'électricité sur la base d'une action piézoélectrique et/ou électromécanique, et
le système de verrouillage électronique (200) comprend en outre :
un deuxième dispositif de stockage d'énergie (220) ; et
un ou plusieurs deuxièmes systèmes de collecte d'énergie (225) couplés au deuxième dispositif de stockage d'énergie (220), chacun des un ou plusieurs deuxièmes systèmes de collecte d'énergie (225) étant configuré pour générer de l'électricité et fournir l'électricité générée au deuxième dispositif de stockage d'énergie (220), chacun des un ou plusieurs deuxièmes systèmes de collecte d'énergie (225) étant incorporé dans le compartiment de rangement d'aéronef ;
dans lequel le système de verrou (205) est également couplé au deuxième dispositif de stockage d'énergie (220) et est également configuré pour recevoir une puissance électrique provenant du deuxième dispositif de stockage d'énergie (220).

9. Compartiment de rangement d'aéronef selon la revendication 8, dans lequel l'un des un ou plusieurs deuxièmes systèmes de collecte d'énergie (225) est configuré pour générer de l'électricité à l'aide d'un dispositif piézoélectrique et/ou d'un dispositif électromécanique.

10. Système de compartiment de rangement électronique autonome pour une utilisation dans un aéronef, le système de compartiment de rangement comprenant le compartiment de rangement d'aéronef selon la revendication 8 ou 9 et dans lequel le système de verrouillage électronique (200) comprend en outre :
un troisième dispositif de stockage d'énergie (230) ; et
un ou plusieurs troisièmes systèmes de collecte d'énergie (235) couplés au troisième dispositif de stockage d'énergie (230), chacun des un ou plusieurs troisièmes systèmes de collecte d'énergie (235) étant configuré pour générer de l'électricité et fournir l'électricité générée au troisième dispositif de stockage d'énergie (230), chacun des un ou plusieurs troisièmes systèmes de collecte d'énergie (235) étant monté à l'extérieur du compartiment de rangement d'aéronef ;
dans lequel le système de verrou (205) est également couplé au troisième dispositif de stockage d'énergie (230) et est également configuré pour recevoir une puissance électrique provenant du troisième dispositif de stockage d'énergie (230).

11. Système selon la revendication 10, dans lequel l'un des un ou plusieurs troisièmes systèmes de collecte d'énergie (235) est configuré pour générer de l'électricité à l'aide d'un dispositif photovoltaïque.

12. Système selon la revendication 10, dans lequel l'un des un ou plusieurs troisièmes systèmes de collecte d'énergie (235) est configuré pour générer de l'électricité à l'aide d'un dispositif thermoélectrique.

13. Système selon la revendication 11 dans lequel le système de verrouillage électronique (200) comprend en outre un afficheur bistable à basse consommation d'énergie monté sur une surface (510) du bouton de verrou (110, 500), l'afficheur bistable à basse consommation d'énergie fournissant une indication d'un état de verrouillage de la porte (305).

14. Aéronef comprenant le système selon la revendication 10, dans lequel le compartiment de rangement d'aéronef est monté à l'intérieur de l'aéronef et dans lequel l'un des un ou plusieurs troisièmes systèmes de collecte d'énergie (235) est configuré pour générer de l'électricité par la collecte de vibrations de cabine d'aéronef.

15. Procédé de fonctionnement d'un système de verrouillage (100) d'un compartiment de rangement d'aéronef, comprenant les étapes de :
la génération d'électricité dans un ou plusieurs systèmes de collecte d'énergie (140, 215, 225, 235) par la collecte de vibrations de cabine d'aéronef ;
la fourniture de l'électricité générée à un dispositif de stockage d'énergie (130, 210, 220, 230) ;
lors de l'activation d'un bouton de verrou (110, 310, 500), la génération d'un signal dans un commutateur électronique qui est couplé à une entrée d'un mécanisme de verrouillage électronique (120, 400) ; et
lors de la réception du signal au niveau de l'entrée du mécanisme de verrouillage électronique (120, 400), le fait d'amener la porte (305) du compartiment de rangement d'aéronef à s'ouvrir par l'activation du mécanisme de verrouillage électronique (120, 400), dans lequel le mécanisme de verrouillage électronique (120, 400) est configuré pour recevoir une puissance électrique provenant uniquement du dispositif de stockage d'énergie (130, 210, 220, 230).
